# EUROPEAN PATENT APPLICATION

(11) **EP 4 826 853 A1**
(43) Date of publication of application: **21.10.2026**
(21) Application number: 25170992.9
(22) Date of filing: 16.04.2025
(51) Int. Cl.: H01M 10/6557, H01M 10/613, H01M 10/625, H01M 10/647, H01M 10/6568, H01M 50/209, H01M 50/249, H01M 50/291

(54) **BATTERY MODULE, BATTERY PACK AND ELECTRIC VEHICLE INCLUDING THE SAME**

(71) Applicant: SAMSUNG SDI CO., LTD., Yongin-si, Gyeonggi-do 17084 (KR)
(72) Inventor: Rath, Helmut, 8481 St. Veit (AT); Graspeuntner, Johannes, 8010 Graz (AT); Pranjic, Matej, 8073 Feldkirchen at Graz (AT); Hasenauer, Stefan, 8020 Graz (AT); Gutierrez Duarte, Juan Manuel, 8010 Graz (AT)
(74) Representative: Gulde & Partner

(57) **Abstract**

Battery module (100), comprising: a stack (10) of a plurality of battery cells (12) with spacers (14) arranged between the battery cells (12); and a battery module housing (20) for accommodating the stack (10) and comprising a bottom (22), a first side wall (24) and an opposing second side wall (26), wherein the battery module housing (20) is configured to hold a liquid coolant, the stack (10) is immersed in the liquid coolant, and the spacers (14) are configured to allow the liquid coolant to pass through from one side of the stack (10) to the other; wherein the first side wall (24) comprises a first bulge (50) having a first flow passage for the liquid coolant and extending over the entire length of the first side wall (24); the second side wall (26) comprises a second bulge (60) having a second flow passage for the liquid coolant and extending over the entire length of the second side wall (26), and wherein a coolant inlet (52) is provided at one end of the first bulge (50) and a coolant outlet (62) is provided at one end of the second bulge (60).

## Description

### Field of the Disclosure

Embodiments of the present disclosure relate to a battery module, a battery pack including two or more the battery modules and an electric vehicle including the battery module, respectively the battery pack.

### Technological Background

A battery module is formed of a plurality of battery cells connected together in series and/or in parallel. The battery module is formed by interconnecting electrode terminals of the plurality of battery cells with the number and connection configuration of the battery cells depending on a desired amount of power, to realize a relatively high-power rechargeable battery.

Battery modules can be constructed either in a block design or in a modular design. In the block design, each battery cell is coupled to a common current collector structure and a common cell management unit and accommodated in a housing. In the modular design, pluralities of battery cells are connected together to form submodules, and several submodules are connected together to form the battery module. In automotive applications, battery systems often include a plurality of battery modules connected together in series to provide a desired voltage.

A battery pack is a set of any number of (for example identical) battery modules and/or single battery cells. The battery modules or respectively the battery cells, may be connected in a series, parallel or series/parallel configuration to deliver the desired voltage, capacity, and/or power density. Components of a battery pack include the individual battery modules, and interconnects, which provide electrical conductivity between the battery modules.

An active or passive thermal management system may be included to provide thermal control of the battery pack, to safely use at least one battery module by efficiently emitting, discharging, and/or dissipating heat generated from its rechargeable batteries. If the heat emission/discharge/dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus charging and discharging performance of the rechargeable battery deteriorates and the life-span of the rechargeable battery is shortened. Thus, cell cooling for effectively emitting/discharging/dissipating heat from the battery cells is desired.

The effective management of thermal energy is essential for the optimal functioning and longevity of rechargeable batteries in mobile applications. This is because the ability to regulate temperature is crucial for maintaining full performance and operational readiness in a wide range of conditions. Thermal management encompasses both cooling and heating operations. Given the considerable diversity of rechargeable battery variants, characterized by differences in cell chemistry and structure, the thermal management must be tailored to the specific requirements of each variant. A similar situation pertains with regard to the numerous different vehicle applications, which encompass a range of vehicles from small city cars to sports cars, as well as vehicles with mild hybridization and purely electric vehicles. Furthermore, integration into the vehicle's thermal circuits is of significant importance.

In the case of air cooling, cooling air flows around the battery cell, thereby cooling the freely accessible surfaces. As this type of cooling does not necessitate direct thermal contact with the battery cell, the interface to the cooling system is relatively straightforward. Nevertheless, the installation space required for the cooling air ducts between the battery cells is considerable, and the cooling effectiveness, in particular the homogeneity of cell cooling, is often inadequate. In contrast, cooling methods that establish thermal contact with the battery cell and dissipate the heat via heat conduction are demonstrably more effective than air cooling in terms of cooling efficacy. Nevertheless, the design of the thermal contact presents a new set of challenges. The interface to the cooling system is more complex, as the cooling apparatus is in direct contact with the electrical components of the battery cell. In the case of cells with a low height and sufficiently thick cell walls, it is sufficient to simply make contact with a bottom of the battery cell via a cooling plate. Should this prove inadequate, supplementary heat conduction elements must be incorporated between the battery cells to facilitate the transfer of heat to the cooling plate. However, this results in a heavier and more expensive cooling system. The use of fluid-conducting cooling plates between the battery cells has been demonstrated to be an effective method, as the heat conduction path from the interior of the battery cell to the cooling fluid is relatively short, resulting in a high degree of temperature homogeneity within the battery cell. An alternative approach to cooling is arrester cooling. In this method, the interior of the battery cell is cooled directly via electrodes of the battery cell. For example, pouch-type battery cells are well-suited for this type of cooling, as they have flat, and therefore relatively easy-to-contact, terminals. The waste heat from the battery cells is directed into a cooling plate. There, either cooling water or an evaporating refrigerant absorbs the heat and dissipates it to the environment via the vehicle's cooling or refrigeration system.

Another method of cooling the battery cells is immersion cooling, where the cells are fully immersed in the cooling agent flowing around the cell housings. Immersion cooling enables excellent cooling performance. By using a sealed cover-tub, where the cells are only partially immersed in the cooling agent, the risk of short circuits is also minimized.

### Summary of Invention

The invention is defined by the appended claims. The description that follows is subjected to this limitation. Any disclosure lying outside the scope of the claims is only intended for illustrative as well as comparative purposes.

According to an embodiment, there is provided a battery module, including a stack of a plurality of battery cells with spacers arranged between the battery cells, and a battery module housing for accommodating the stack and including a bottom, a first side wall and an opposing second side wall, wherein the battery module housing is configured to hold a liquid coolant, the stack is immersed in the liquid coolant, and the spacers are configured to allow the liquid coolant to pass through from one side of the stack to the other, wherein the first side wall includes a first bulge having a first flow passage and extending over the entire length of the first side wall, the second side wall includes a second bulge having a second flow passage and extending over the entire length of the second side wall, and wherein a coolant inlet is provided at one end of the first bulge and a coolant outlet is provided at one end of the second bulge.

According to an embodiment, a battery pack is provided, which includes a side-by-side arrangement of two or more battery modules. The battery modules are arranged such that the first side walls and the second side walls are adjacent to one another.

According to another embodiment, an electric vehicle is provided including the aforementioned battery module or aforementioned battery pack.

Further embodiments of the present disclosure could be learned from the dependent claims or the following description.

### Brief Description of the Drawings

Features will become apparent to those of ordinary skill in the art by describing in detail exemplary embodiments with reference to the attached drawings in which:
- FIG. 1: illustrates a perspective view on a battery module according to an embodiment.
- FIG. 2: illustrates an exploded view on the battery module of FIG. 1.
- FIG. 3: illustrates a partial cross-sectional view on a side-by-side arrangement of three battery modules according to an embodiment and further includes an illustration of coolant flow through a spacer of the battery module.
- FIG. 4: illustrates a top view on the battery module of FIG. 1 without a cover tub and includes an illustration of coolant flow within a battery module housing.
- FIG. 5: illustrates a partial cross-sectional view on the battery module of FIG. 1 and includes an illustration of coolant flow within a part of the battery module housing.
- FIG. 6: illustrates an electric vehicle including a battery pack according to another embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the embodiments and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Expressions such as "at least one of", when preceding a list of elements, modify the entire list of elements and do not modify the individual elements of the list. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

The electronic or electric devices and/or any other relevant devices or components according to embodiments of the present disclosure described herein may be implemented utilizing any suitable hardware, firmware (for example an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, for example on a PCB or another kind of circuit carrier. The conducting elements may include metallization, for example surface metallizations and/or pins, and/or may include conductive polymers or ceramics. Further electrical energy might be transmitted via wireless connections, for example using electromagnetic radiation and/or light.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one embodiment of the present disclosure, there is provided a battery module, including a stack of a plurality of battery cells with spacers arranged between the battery cells, and a battery module housing for accommodating the stack and including a bottom, a first side wall and an opposing second side wall, wherein the battery module housing is configured to hold a liquid coolant, the stack is immersed in the liquid coolant, and the spacers are configured to allow the liquid coolant to pass through from one side of the stack to the other, wherein the first side wall includes a first bulge having a first flow passage and extending over the entire length of the first side wall, the second side wall includes a second bulge having a second flow passage and extending over the entire length of the second side wall, and wherein a coolant inlet is provided at one end of the first bulge and a coolant outlet is provided at one end of the second bulge.

One aspect of the present invention relates to a battery module. A battery module may be understood as a structural unit including interconnected battery cells for storing and supplying electrical energy, typically housed within a casing designed to provide mechanical support, thermal management, and protection against environmental factors.

The battery module includes a stack of a plurality of battery cells with spacers arranged between the battery cells. A stack refers to a sequential arrangement of battery cells positioned in close proximity to form a cohesive assembly, while spacers are interstitial components designed to maintain a predetermined spacing or spacing range between adjacent battery cells. This arrangement enables controlled physical separation between the battery cells, ensuring mechanical stability, enhancing thermal dissipation, and facilitating fluid flow for cooling. One of the advantages of this arrangement is the effective management of heat generated during operation, which helps to extend battery life and enhance performance.

The battery module includes a battery module housing for accommodating the stack, where the battery module housing includes a bottom, a first side wall, and an opposing second side wall. The battery module housing serves as an enclosure that protects the stack from mechanical damage and environmental exposure while providing a structure for integrating thermal management components. One of the advantages of the battery module housing design is its ability to hold a liquid coolant, allowing the stack to be immersed in the liquid coolant for efficient thermal regulation. This immersion-based cooling mechanism enhances heat dissipation by ensuring uniform temperature distribution across the stack.

The spacers are configured to allow the liquid coolant to pass through from one side of the stack to the other. The configuration of the spacers includes channels or openings that permit fluid flow through the interstitial spaces between battery cells. This arrangement ensures direct contact between the liquid coolant and the battery cells, improving thermal conductivity and preventing the formation of localized hot spots. One of the advantages of this design is that it improves thermal management performance, which can increase the reliability and safety of the battery module.

The first side wall of the battery module housing includes a first bulge having a first flow passage and extending over its entire length, and the second side wall includes a second bulge having a second flow passage and extending over its entire length. A bulge refers to a structural protrusion or contour integrated into the side wall of the battery module housing to enhance its fluid-handling capacity. The first bulge and the second bulge may have the same contour. The contour may be a half-round elevation from the plane of the side wall. The first and second bulges enable an optimized flow path for the liquid coolant, reducing flow resistance and promoting uniform coolant distribution. One of the advantages of this feature is the enhancement of cooling efficiency, as the coolant is effectively guided across the stack with minimal pressure drops.

A coolant inlet is located at one end of the first bulge, while a coolant outlet is located at one end of the second bulge. Also, the coolant inlet and the coolant outlet are disposed diagonally opposite each other. This arrangement ensures a cross-flow pattern for the liquid coolant, allowing it to traverse the stack diagonally. This diagonal flow path promotes uniform cooling by ensuring consistent heat removal throughout the stack, minimizing thermal gradients. One of the advantages of this arrangement is the improved energy efficiency of the thermal management system, as it enables effective heat removal with minimal coolant usage and pump power requirements.

It may further be provided that the battery module housing includes a top opening, wherein the top opening is covered by a cover tub. A top opening refers to an aperture at the upper side of the battery module housing, and a cover tub is a detachable or fixed structure that seals the battery module housing but maintains terminals of the battery cells free for establishing the electrical interconnection of the battery module. This feature facilitates assembly, maintenance, and inspection of the internal components of the battery module while ensuring containment of the liquid coolant. One of the advantages of this arrangement is the improved ease of manufacturing and serviceability, which can reduce downtime and enhance the module's operational lifespan.

A seal may be arranged between the battery module housing and the cover tub. A seal may be understood as a component made of a deformable material, such as rubber or silicone, that prevents leakage of liquid or gas by forming a tight interface between two surfaces. This arrangement ensures that the coolant remains securely contained within the battery module housing, even during vibration or thermal expansion. One of the advantages of this feature is the enhanced reliability of the battery module, as it minimizes the risk of coolant leakage and potential damage to the battery cells.

According to an embodiment, the spacers include cooling channels extending horizontally from one side of the stack to the other side of the stack. Cooling channels refer to passages integrated into the spacers that allow the liquid coolant to traverse laterally through the stack. This arrangement facilitates direct contact of the liquid coolant with the battery cells, enhancing the efficiency of heat removal. One of the advantages of this feature is the improved thermal regulation of the battery cells, resulting in increased operational safety and performance. According to one embodiment, the spacer has the shape of a corrugated sheet. The corrugated profile is aligned in the stack such that the liquid coolant can run along the corrugations from one side of the stack to the other.

According to an embodiment, a depth of the first bulge and a depth of the second bulge are the same. Depth may be understood as the horizontal distance by which a bulge protrudes from the side wall of the battery module housing. This symmetry in depth ensures uniform flow dynamics and eliminates discrepancies in pressure distribution across the coolant pathway. One of the advantages of this arrangement is the enhanced balance of coolant flow, which promotes even heat dissipation and avoids localized overheating.

According to an embodiment, in the battery module, as measured from the bottom of the battery module housing, the first bulge on the first side wall has a height h1 that is less than a height h2 of the second bulge on the second side wall. A height may be understood as the vertical distance measured perpendicular to the bottom of the battery module housing, and a bulge refers to the protruding contour of a side wall. The measurement is taken where the bulge protrudes the furthest out of the horizontal plane of the side wall. This configuration ensures that the coolant flow path transitions smoothly from the first bulge to the second bulge, facilitating efficient diagonal and vertical fluid flow. One of the advantages of this arrangement is improved coolant distribution, as the design minimizes turbulence and optimizes the flow direction, leading to consistent cooling across the stack.

According to another embodiment, a battery pack includes a side-by-side arrangement of two or more of the aforementioned battery modules, with the battery modules arranged such that the first side walls and second side walls are adjacent to one another. The first bulge on the first side wall has the height h1 that is less than the height h2 of the second bulge. The bulges of neighboring battery modules are not at the same height, but interlock in the side-by-side arrangement so that the installation space in the battery pack is optimally utilized. Accordingly, the height h1 and height h2 are selected such that the first and second bulges of neighboring battery module housings are not next to each other, but horizontally below each other in the side-by-side arrangement. A side-by-side arrangement refers to the parallel positioning of multiple battery modules within a single battery pack housing. According to an embodiment, the depth of the first bulge and a depth of the second bulge are the same. Further, the contour of the first bulge and the contour of the second bulge may equal each other. This configuration allows for compact integration of multiple energy storage units while maintaining effective cooling. One of the advantages of this arrangement is the increased energy density of the battery pack without compromising the thermal management system's performance.

According to another aspect of the disclosure, each of the aforementioned battery module, or battery pack, is incorporated into an electric vehicle. An electric vehicle may be understood as a transport vehicle powered primarily, alternatively, or in parallel by an electric motor and including energy stored in rechargeable batteries. The integration of the battery module (or the battery pack) into an electric vehicle provides a compact, efficient, and thermally managed energy source for vehicle propulsion. One of the advantages of this arrangement is the contribution to sustainable mobility through the use of advanced, efficient energy storage technology.

### Specific Embodiments

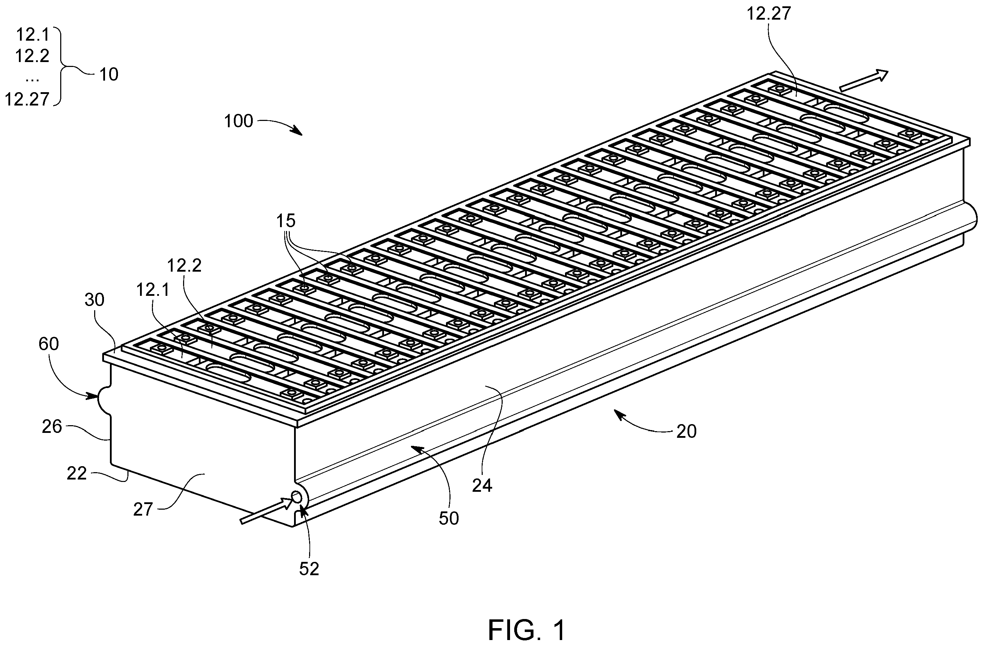

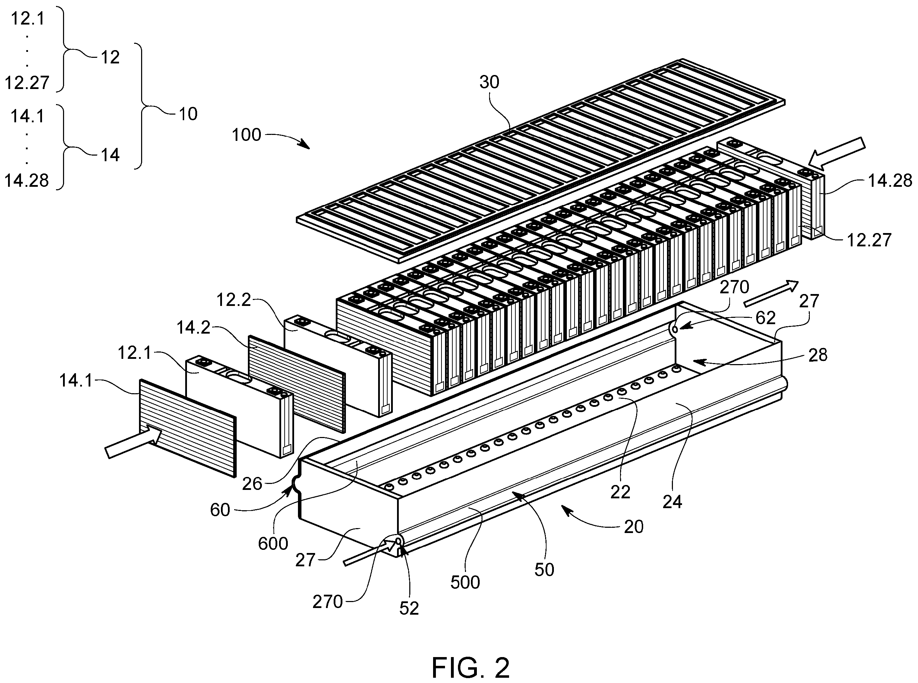

FIG. 1 is a perspective view on a battery module 100 according to an embodiment. FIG. 2 is an exploded view on the battery module 100 of FIG. 1. The battery module 100 includes a stack 10 of in total twenty-seven prismatic battery cells 12,12.1-12.27 with spacers 14,14.1-14.28 arranged between them. The battery module 100 further includes a battery module housing 20 for accommodating the stack 10. The battery module housing 20 includes a bottom 22, a first side wall 24, an opposing second side wall 26, and a pair of narrow side walls 27 facing the ends of the stack 10. The battery module housing 20 may be formed of a metallic material, such as stainless steel of aluminum.

The battery module housing 20 includes a top opening 28, which is covered by a cover tub 30. The cover tub 30 is a detachable or fixed structure that seals the battery module housing 20 but maintains terminals 15 of the battery cells 12,12.1-12.27 free for establishing the electrical interconnection of the battery module 100.

The battery module housing 20 is configured to hold a liquid coolant and the stack 10 is immersed in the liquid coolant. Furthermore, the spacers 14 are configured to allow the liquid coolant to pass through from one side of the stack 10 to the other. The first side wall 24 includes a first bulge 50 extending over the entire length of the first side wall 24. The first bulge 50 has a first flow passage 500 for the liquid coolant. In the embodiment, the first flow passage 500 includes a groove disposed on the inner surface of the first side wall 24 along the longitudinal direction of the first bulge 50. The second side wall 26 includes a second bulge 60 extending over the entire length of the second side wall 26. The second bulge 60 has a second flow passage 600 for the liquid coolant. In the embodiment, the second flow passage 600 includes a groove disposed on the inner surface of the second side wall 26 along the longitudinal direction of the second bulge 60. A depth of the first bulge 50 and a depth of the second bulge 60 are the same.

A coolant inlet 52 is provided at one end of the first bulge 50 and a coolant outlet 62 is provided at one end of the second bulge 60. In the embodiment, the coolant inlet 52 and the coolant outlet 62 are disposed diagonally opposite each other. In the embodiment, each of the pair of narrow side walls 27 includes protrusions 270 arranged opposite each other at both short side ends. The coolant 52 inlet 52 includes an opening provided in one of the protrusions 270 of the one narrow side wall 27, and the outlet 62 includes an opening provided in one of the protrusions 270 of the other narrow side wall 27. In the embodiment, the first and second side walls 24, 26 and the narrow side walls 27 may form a structure for the battery module housing 20 by inserting the protrusions 270 of the narrow side walls 27 into the first flow passage 500 and the second flow passage 600. Further, the coolant inlet 52 is fluidly connected with the first flow passage 500, and the coolant outlet 62 is fluidly connected with the second flow passage 600. The liquid coolant enters the battery module housing 20 via the coolant inlet 52 and leaves the battery module housing 20 via the coolant outlet 62, which is illustrated by the arrows.

The stack 10 is composed of alternately arranged twenty-seven battery cells 12.1-12.27 and twenty-eight spacers 14.1-14.28, which are compressed against each other prior to inserting the stack 10 into the battery module housing 20. The spacers 14.1-14.28 have the shape of a corrugated sheet.

FIG. 2 illustrates the inner shape of the second bulge 60 in the second side wall 26. The second bulge 60 is open on the inside, so that the liquid coolant in a bulge area is in direct contact with the side walls of the battery cells 12.1-12.27. The first bulge 50 on the first side wall 24 has a similar contour.

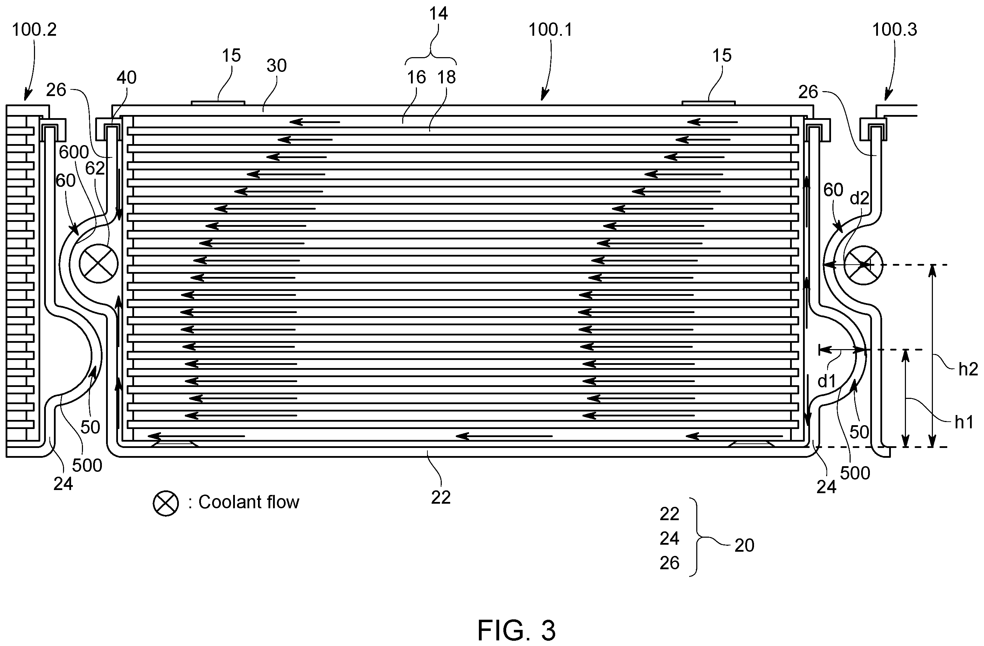

FIG. 3 illustrates a partial cross-sectional view on a side-by-side arrangement of three battery modules 100.1-100.3 according to an embodiment and further includes an illustration of coolant flow through a spacer 14 of the battery module 100.1. The cross-section passes through the module housing 20 and the stack 10, parallel to one of the spacers 14 of the stack 10. The battery modules 100.1-100.3 may have the same structure as the battery module 100 illustrated in FIG.1.

The spacer 14 includes cooling channels 16 and walls 18 horizontally connecting both sides of the stack 10 for passing the liquid coolant. As illustrated by the arrows, the liquid coolant passes form the first side wall 24 through the cooling channels 16 of the spacer 14 to the second side wall 26 and will leave the battery module housing 20 via the coolant outlet 62 positioned at one end of the second bulge 60.

A seal 40 is arranged between the battery module housing 20 and the cover tub 30. The cover tub 30 may include further seals (not shown) to seal openings where the terminals 15 of the battery cells 12.1-12.27 protrude.

The illustrated side-by-side arrangement includes three battery modules 100.1, 100.2, and 100.3. The first side wall 24 of the battery module housing 20 of the battery module 100.2 faces the second side wall 26 of the centrally positioned battery module 100.1. The first side wall 24 of the battery module housing 20 of the centrally positioned battery module 100.1 faces the second side wall 26 of the battery module 100.3.

Measured from the bottom 22 of the battery module housing 20, the first bulge 50 on the first side wall 24 has a height h1 that is less than a height h2 at of the second bulge 60 on the second side wall 26. The height h1 and height h2 are selected such that the first bulges 50 and second bulges 60 of neighboring battery module housings 20 are not next to each other, but horizontally below each other in the side-by-side arrangement. Further, a depth d1 of the first bulges 50 and a depth d2 of the second bulges 60 are the same in each of the battery modules 100.1-100.3. In addition, the first bulges 50 and the second bulges 60 have the same contour. Accordingly, a very compact arrangement of the battery modules 100.1-100.3 in a battery pack can be achieved.

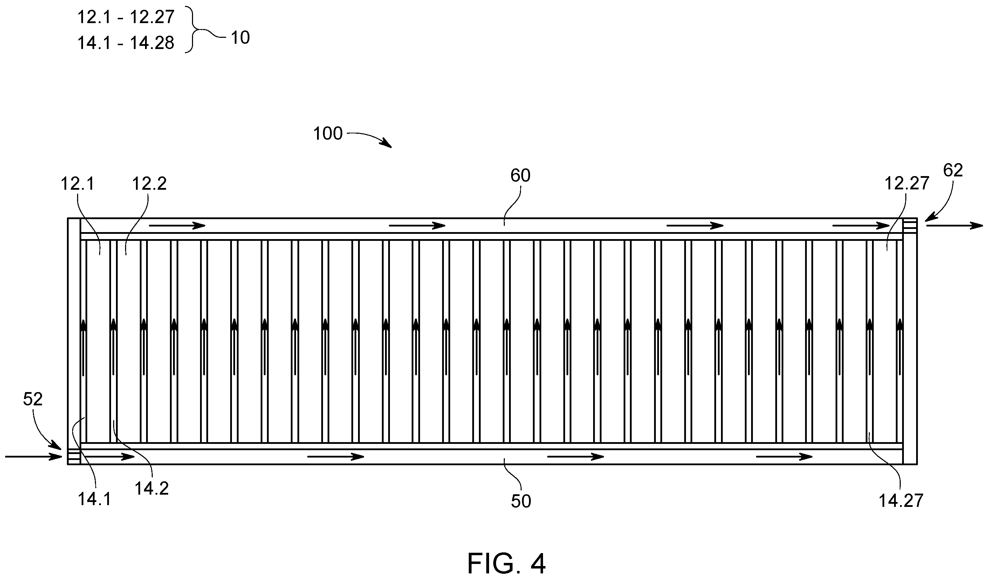

FIG. 4 illustrates a top view on the battery module 100 of FIG. 1, but without the cover tub 30 so as to illustrate of coolant flow within the battery module housing 20. The liquid coolant enters the battery module housing 20 at the coolant inlet 52. The liquid coolant is then distributed in lengthwise direction of the battery stack 10. A main coolant flow will pass the first bulge 50. Furthermore, the liquid coolant may also horizontally pass the spacers 14.1-14.28 and will be collected in the second bulge 60. Finally, the liquid coolant will leave the battery module housing 20 through the coolant outlet 62 provided at a diagonally opposite end of the second bulge 60.

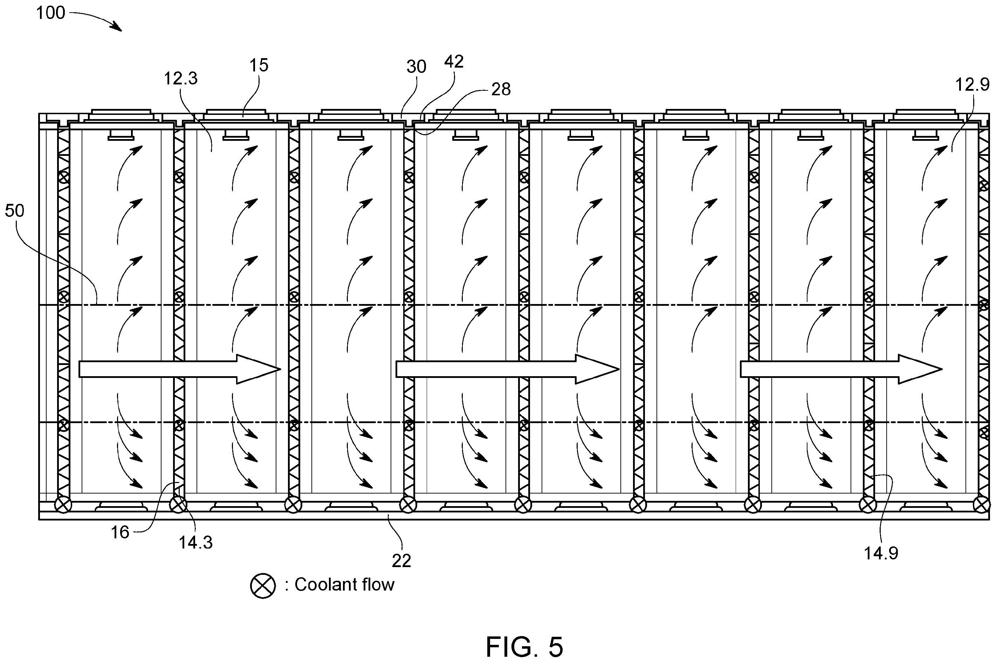

FIG. 5 illustrates a partial cross-sectional view on the battery module of FIG. 1 and includes an illustration of coolant flow within a part of the battery module housing 20. The cut is made in such a way that the first side wall 24 of the battery module housing 20 is removed, allowing a view of on a part of the stack 10. The cover tub 30 includes seals 42 to seal openings where the terminals 15 of the batteries cells 12.1-12.27 protrude. The cover tub 30 is detachable and seals the battery module housing 20, i.e. prevent the liquid coolant from leaking out of the top opening 28 of the battery module housing 20, but maintains the terminals 15 of the battery cells 12.1-12.27 free for establishing the electrical interconnection of the battery module 100. As indicated by the arrows, the liquid coolant flows mainly along the first bulge 50 (not shown). It also flows around the side walls of the battery cells 12.1-12.27 and enters the cooling channels 16 of the spacers 14.1-14.28 to exit on the opposite side of the stack 10.

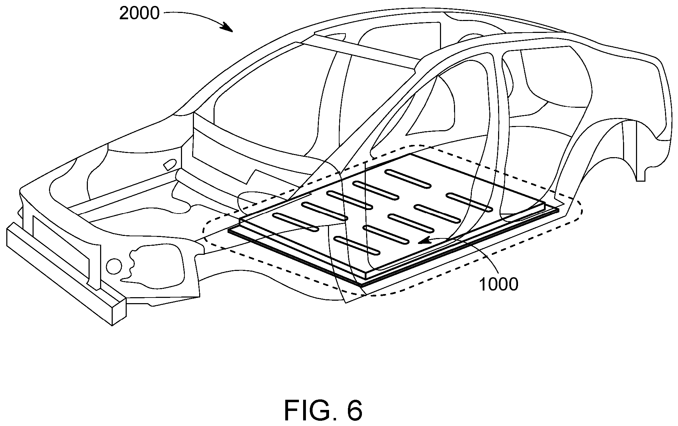

FIG. 6 schematically illustrates an electric vehicle 2000 including a battery pack 1000 according to another embodiment. The battery pack 1000 includes a single battery module 100, for example the one illustrated in FIG. 1, or multiple battery modules 100.1-100.3 being arranged side-by-side, for example as illustrated in FIG. 3.

### Reference signs

10 stack
12, 12.1-12.27 battery cell
14, 14.1-14.28 spacer
16 cooling channel
18 walls
20 battery module housing
22 bottom
24 first side wall
26 second side wall
27 narrow side wall
28 top opening
30 cover tub
40 seal
42 seal
50 first bulge
52 coolant inlet
60 second bulge
62 coolant outlet
100, 100.1-100.3 battery module
1000 battery pack
2000 electric vehicle

## Claims

1. A battery module (100), comprising:
a stack (10) of a plurality of battery cells (12) with spacers (14) arranged between the battery cells (12); and
a battery module housing (20) for accommodating the stack (10) and comprising a bottom (22), a first side wall (24) and an opposing second side wall (26), wherein the battery module housing (20) is configured to hold a liquid coolant, the stack (10) is immersed in the liquid coolant, and the spacers (14) are configured to allow the liquid coolant to pass through from one side of the stack (10) to the other;
wherein the first side wall (24) comprises a first bulge (50) having a first flow passage for the liquid coolant and extending over the entire length of the first side wall (24);
the second side wall (26) comprises a second bulge (60) having a second flow passage for the liquid coolant and extending over the entire length of the second side wall (26), and
wherein a coolant inlet (52) is provided at one end of the first bulge (50) and a coolant outlet (62) is provided at one end of the second bulge (60).

2. The battery module (100) as claimed in claim 1, wherein a depth of the first bulge (50) and a depth of the second bulge (60) are the same.

3. The batter module (100) as claimed in claim 1, wherein the coolant inlet (52) and the coolant outlet (62) are disposed diagonally opposite each other.

4. The battery module (100) as claimed in any one of the preceding claims, wherein the battery module housing (20) comprises a top opening (28), wherein the top opening (28) is covered by a cover tub (30).

5. The battery module (100) as claimed in claim 4, wherein a seal (40) is arranged between the battery module housing (20) and the cover tub (30).

6. The battery module (100) as claimed in any one of the preceding claims, wherein the spacers (14) comprise cooling channels (16) extending horizontally from one side of the stack (10) to the other side of the stack (10).

7. The battery module (100) as claimed in claim 6, wherein the spacer (14) has the shape of a corrugated sheet.

8. The battery module (100) as claimed in any one of the preceding claims, wherein measured from the bottom (22) of the battery module housing (20), the first bulge (50) on the first side wall (24) has a height h1 that is less than a height h2 of the second bulge (60) on the second side wall (26).

9. A battery pack (1000) comprising a side-by-side arrangement of two or more battery modules (100.1, 100.2, 100.3) as defined in claim 8, the battery modules (100.1, 100.2, 100.3) being arranged such that the first side walls (24) and the second side walls (26) are adjacent to one another.

10. An electric vehicle (200) comprising the battery module (100) as claimed in any one of claims 1 through 8 or comprising the battery pack (1000) as claimed in claim 9.
